(19) Europäisches Patentamt
European Patent Office
Office européen des brevets

(11) Veröffentlichungsnummer: **0 009 724**
**B1**

(12) # EUROPÄISCHE PATENTSCHRIFT

(45) Veröffentlichungstag der Patentschrift: **02.06.82**

(51) Int. Cl.³: **C 08 F 10/00,** C 08 F 4/64

(21) Anmeldenummer: **79103540.5**

(22) Anmeldetag: **20.09.79**

(54) **Verfahren zum Herstellen von Homo- und Copolymerisaten von Alpha-Monoolefinen.**

(30) Priorität: **25.09.78 DE 2841645**

(43) Veröffentlichungstag der Anmeldung: **16.04.80 Patentblatt 80/8**

(45) Bekanntmachung des Hinweises auf die Patenterteilung: **02.06.82 Patentblatt 82/22**

(84) Benannte Vertragsstaaten: **AT BE DE FR GB IT**

(56) Entgegenhaltungen:
**DE-A-2 052 525**
**DE-A-2 658 939**

(73) Patentinhaber: **BASF Aktiengesellschaft, Carl-Bosch-Strasse 38, D-6700 Ludwigshafen (DE)**

(72) Erfinder: **Staiger, Gerhard, Dr. Dipl.-Chem., Virchowstrasse 26, D-6712 Bobenheim 2 (DE)**
Erfinder: **Jaggard, James F.R., Dr. Dipl.-Chem., Bruesseler Ring 45, D-6700 Ludwigshafen (DE)**
Erfinder: **Schneider, Paul, Ritterstrasse 5, D-6704 Mutterstadt (DE)**

**EP 0 009 724 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zum Herstellen von Homo- und Copolymerisaten von α-Monoolefinen

Die vorliegende Erfindung liegt im Rahmen eines Verfahrens zum Herstellen von Homo- und Copolymerisaten von $C_2$- bis $C_6$-α-Monoolefinen bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einem Titanhalogenid der Formel

$$TiCl_3 \cdot m\,AlCl_3$$

worin m steht für eine Zahl von 0 bis 0,5, insbesondere 0,1 bis 0,4,

(2) einer Sauerstoffverbindung der Formel

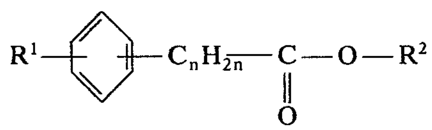

worin stehen

- $R^1$ für Wasserstoff, eine $C_1$- bis $C_4$-Alkylgruppe oder eine $C_1$- bis $C_4$-Alkoxygruppe, vorzugsweise Wasserstoff oder eine $C_1$- bis $C_2$-Alkylgruppe, und insbesondere Wasserstoff,
- $R^2$ für eine $C_1$- bis $C_4$-Alkylgruppe, insbesondere die Äthylgruppe, und
- n für eine ganze Zahl von 0 bis 3, insbesondere die Zahl 1,

und

(3) einem Aluminiumalkyl der Formel

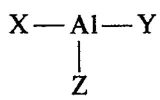

worin stehen

- X sowie
- Y für eine jeweils nicht mehr als 8, insbesondere nicht mehr als 2 Kohlenstoffatome aufweisende Alkylgruppe,
- Z für Chlor oder eine nicht mehr als 8, insbesondere nicht mehr als 2 Kohlenstoffatome aufweisende Alkylgruppe,

mit den Maßgaben, daß (I) das Molverhältnis Titanhalogenid (1) : Sauerstoffverbindung (2) im Bereich von 1 : 1 bis 20 : 1, insbesondere 3 : 1 bis 6 : 1 liegt, (II) das Molverhältnis Titanhalogenid (1) : Aluminiumalkyl (3) 1 : 1 bis 1 : 20, insbesondere 1 : 2 bis 1 : 15 beträgt, sowie (III) das Titanhalogenid (1) und die Sauerstoffverbindung (2) vor ihrem Einsatz miteinander vermahlen worden sind.

Verfahren dieser Gattung sind bekannt; ihre Besonderheit gegenüber vergleichbaren anderen Verfahren liegt in der speziellen Ausgestaltung des Katalysatorsystems, wofür als typisches Beispiel die DE-A-2 658 939 zitiert werden kann.

Die speziellen Ausgestaltungen des Katalysatorsystems werden vorgenommen, um bestimmte Ziele zu erreichen, z. B. die folgenden:

(a) Katalysatorsysteme, die bei der Polymerisation von α-Monoolefinen, wie insbesondere Propylen, zu Polymerisaten mit einem hohen Anteil an stereoregulärem (=isotaktischem) Polymerisat führen.

(b) Katalysatorsysteme, die eine erhöhte Ausbeute an Polymerisat zu liefern vermögen, nämlich Systeme mit einer erhöhten Produktivität, d. h. Systeme, bei denen die Menge an gebildetem Polymerisat pro Gewichtseinheit des Katalysatorsystems erhöht ist.

(c) Katalysatorsysteme, durch die weniger Halogen in das Polymerisat eingebracht werden; — was zu erreichen ist, indem die Ausbeute gemäß (b) gesteigert wird und/oder ein Titanhalogenid eingesetzt wird, das möglichst wenig Halogen erhält.

(d) Katalysatorsysteme, deren Aktivitätsmaximum über eine möglichst lange Zeit konstant bzw. relativ konstant bleibt; — was für die Katalysatorausbeuten von erheblicher Bedeutung ist.

(e) Katalysatorsysteme, die es erlauben, durch Erhöhung der Polymerisationstemperatur eine Umsatzsteigerung zu bewirken ohne signifikante Minderung der Stereoregularität der Polymerisate; — ein Effekt, der generell erwünscht ist, insbesondere auch bei der Trockenphasenpolymerisation.

(f) Katalysatorsysteme, durch welche — insbesondere bei relativ hohen Polymerisationstemperaturen — die morphologischen Eigenschaften der Polymerisate in bestimmter Weise beeinflußt werden, etwa im Sinne einer einheitlichen Korngröße und/oder einer Verringerung der Feinstkornanteile und/oder eines hohen Schüttgewichtes; — was z. B. für die technische Beherrschung der Polymerisationssysteme, die Aufarbeitung der Polymerisate und/oder die Verarbeitbarkeit der Polymerisate von Bedeutung sein kann.

(g) Katalysatorsysteme, die einfach und sicher herzustellen und gut handzuhaben sind; — z. B. solche, die sich in (inerten) Kohlenwasserstoff-Hilfsmedien zubereiten lassen.

(h) Katalysatorsysteme, die es ermöglichen, bei der Polymerisation unter Einwirkung eines Molekulargewichtsreglers, wie insbesondere Wasserstoff, mit relativ geringen Mengen an Regler auszukommen; — was z. B. für die Thermodynamik der Verfahrensausführung von Bedeutung sein kann.

(i) Katalysatorsysteme, die auf spezielle Polymerisationsverfahren zugeschnitten sind; — etwa solche, die z. B. entweder auf die spezifischen Besonderheiten der Suspensionspolymerisation oder auf die spezifischen Besonderheiten der Trockenphasenpolymerisation abgestimmt sind.

(j) Katalysatorsysteme, die zu Polymerisaten führen, deren Eigenschaftsspektrum sie für das eine oder das andere Anwendungsgebiet besonders geeignet macht.

Nach den bisherigen Erfahrungen gibt es unter den mannigfachen Zielen etliche Ziele, die man durch spezielle Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen liegt die Aufgabenstellung der vorliegenden Erfindung: Eine neue Ausgestaltung eines Katalysatorsystems aufzuzeigen, mit der man gegenüber bekannten Ausgestaltungen — unter vergleichbarer Zielsetzung — bessere Ergebnisse erreichen kann.

Es wurde gefunden, daß die gestellte Aufgabe gelöst werden kann mit einem Katalysatorsystem der eingangs definierten Art, das als eine weitere Komponente (4) einen bestimmten phenolischen Stoff enthält.

Gegenstand der vorliegenden Erfindung ist mithin ein Verfahren zum Herstellen von Homo- und Copolymerisaten von $C_2$- bis $C_6$-$\alpha$-Monoolefinen bei Temperaturen von 20 bis 160, insbesondere 50 bis 120° C und Drücken von 1 bis 100, insbesondere 20 bis 70 bar mittels eines Ziegler-Natta-Katalysatorsystems aus

(1) einem Titanhalogenid der Formel

$$TiCl_3 \cdot m\,AlCl_3$$

worin m steht für eine Zahl von 0 bis 0,5, insbesondere 0,1 bis 0,4,

(2) einer Sauerstoffverbindung der Formel

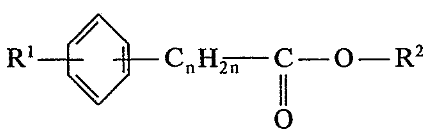

worin stehen

$R^1$ für Wasserstoff, eine $C_1$- bis $C_4$-Alkylgruppe oder eine $C_1$- bis $C_4$-Alkoxygruppe, vorzugsweise Wasserstoff oder eine $C_1$- bis $C_2$-Alkylgruppe, und insbesondere Wasserstoff,

$R^2$ für eine $C_1$- bis $C_4$-Alkylgruppe, insbesondere die Äthylgruppe, und

n für eine ganze Zahl von 0 bis 3, insbesondere die Zahl 1,

und

(3) einem Aluminiumalkyl der Formel

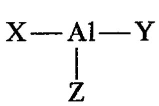

worin stehen

X sowie
Y für eine jeweils nicht mehr als 8, insbesondere nicht mehr als 2 Kohlenstoffatome aufweisende Alkylgruppe,
Z für Chlor oder eine nicht mehr als 8, insbesondere nicht mehr als 2 Kohlenstoffatome aufweisende Alkylgruppe,

mit den Maßgaben, daß (I) das Molverhältnis Titanhalogenid (1) : Sauerstoffverbindung (2) im Bereich von 1 : 1 bis 20 : 1, insbesondere 3 : 1 bis 6 : 1 liegt, (II) das Molverhältnis Titanhalogenid (1) : Aluminiumalkyl (3) 1 : 1 bis 1 : 20, insbesondere 1 : 2 bis 1 : 15 beträgt, sowie (III) das Titanhalogenid (1) und die Sauerstoffverbindung (2) vor ihrem Einsatz miteinander vermahlen worden sind. Das erfindungsgemäße Verfahren ist dadurch gekennzeichnet, daß man ein Katalysatorsystem einsetzt, das als eine weitere Komponente

(4) 1,3,5-Trimethyl-2,4,6-tris-(3,5-di-tert.-butyl-4-hydroxy-benzyl)-benzol oder einen phenolischen Stoff der Formel

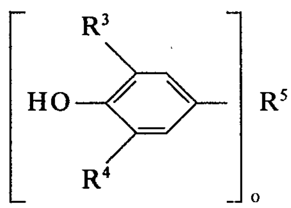

oder

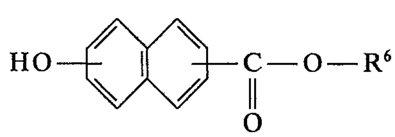

(I) (II)

enthält, worin stehen

$R^3$ für eine $C_1$- bis $C_6$-, insbesondere $C_3$- bis $C_4$-Alkylgruppe,
$R^4$ für Wasserstoff oder eine $C_1$- bis $C_6$-, insbesondere $C_3$- bis $C_4$-Alkylgruppe,
$R^5$ für Wasserstoff oder einen nicht mehr als 30, insbesondere nicht mehr als 24 Kohlenstoffatome sowie — gegebenenfalls — bis zu insgesamt 6, insbesondere bis zu insgesamt 4 Äthergruppen und/oder Estergruppen aufweisenden gesättigten Kohlenwasserstoffrest,
$R^6$ für eine $C_2$- bis $C_{24}$-, insbesondere $C_4$- bis $C_{18}$-Alkylgruppe, und
o für eine ganze Zahl von 1 bis 6, insbesondere 1 bis 4,

mit der Maßgabe, daß das Molverhältnis Aluminiumalkyl (3) : phenolischer Stoff (4) 1 : 1 bis 40 : 1, insbesondere 3 : 1 bis 25 : 1 beträgt.

Zu dem erfindungsgemäßen Verfahren ist im einzelnen das folgende zu bemerken:

Das Polymerisationsverfahren als solches kann — unter Beachtung der kennzeichnenden Besonderheit — in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren, Lösungs-Polymerisationsverfahren oder Trockenphasen-Polymerisationsverfahren. Die erwähnten technologischen Ausgestaltungen — mit anderen Worten: die technologischen Varianten der Polymerisation von $\alpha$-Monoolefinen nach Ziegler-Natta — sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z. B. mittels Reglern, wie insbesondere Wasserstoff.

Des weiteren ist noch festzuhalten, daß beim erfindungsgemäßen Verfahren die Komponenten des Katalysatorsystems in mannigfacher Weise in den Polymerisationsraum eingebracht werden können, z. B. (i) das Vermahlungsprodukt aus dem Titanhalogenid (1) und der Sauerstoffverbindung (2) als eine Komponente, das Aluminiumalkyl (3) sowie der phenolische Stoff (4) als zwei weitere Komponenten alle örtlich gemeinsam, (ii) die gleichen drei Komponenten alle örtlich getrennt voneinander, (iii) das Vermahlungsprodukt aus (1) und (2) einerseits und ein Gemisch aus (3) und (4) andererseits örtlich getrennt voneinander — was insbesondere beim Trockenphasen-Polymerisationsverfahren von Vorteil sein kann —, oder (iiii) ein Gemisch aus dem Vermahlungsprodukt aus (1) und (2) und dem phenolischen Stoff (4) einerseits und das Aluminiumalkyl (3) andererseits örtlich getrennt voneinander.

Schließlich ist darauf hinzuweisen, daß die vorteilhaften Eigenschaften des erfindungsgemäßen Verfahrens im allgemeinen besonders dann in Erscheinung treten, wenn es als Trockenphasen-Polymerisationsverfahren durchgeführt wird (für dessen Ausgestaltungen typische Beispiele etwa mit den

DE-AS 1 217 071, 1 520 307 und 1 520 373 gegeben sind).

Eine Maßgabe beim erfindungsgemäßen Verfahren besteht darin, daß das Titanhalogenid (1) und die Sauerstoffverbindung (2) vor ihrem Einsatz miteinander vermahlen worden sind. Auch dieses Vermahlen kann in einschlägig üblicher Weise erfolgt sein, am einfachsten etwa durch gemeinsame Behandlung der beiden Komponenten in einer Schwingmühle, insbesondere Kugelschwingmühle, über eine Zeitspanne von 2 bis 50 Stunden bei einer Temperatur von 0 bis 40°C unter einer Mahlbeschleunigung von 30 bis 80 m · $sec^{-2}$ in An- oder — vorzugsweise — Abwesenheit von Verdünnungsmitteln. Das Vermahlen kann aber auch in besonders ausgestalteten Vermahlverfahren erfolgt sein, z. B. nach dem Verfahren aus der eingangs bereits zitierten DE-OS 2 658 939.

Was die stoffliche Seite des neuen Katalysatorsystems betrifft, ist im einzelnen das folgende zu sagen:

Das einzusetzende Titanhalogenid (1) kann ein bei Ziegler-Natta-Katalysatorsystemen übliches sein, z. B. ein bei der Reduktion eines Titantetrahalogenids mittels Wasserstoff, Aluminium oder aluminiumorganischen Verbindungen erhaltenes Reaktionsprodukt. Als gut geeignet haben sich erwiesen z. B. Trichloride der Formel $TiCl_3$, wie sie bei der Reduktion von Titantetrachlorid mittels Wasserstoff anfallen sowie insbesondere Kokristallisate wie sie durch Kokristallisation von $TiCl_3$ und $AlCl_3$ oder Reduktion von $TiCl_4$ mittels Aluminium bzw. Gemischen aus Aluminium und Titan erhalten werden können. Besonders gut geeignet sind Kokristallisate der Formel $TiCl_3 \cdot \frac{1}{3} AlCl_3$. Die in Betracht kommenden Titanhalogenide (1) sind im Handel erhältlich, so daß sich nähere Ausführungen erübrigen.

Auch als Sauerstoffverbindungen (2) mit der angegebenen Formel kommen die einschlägig üblichen, dieser Formel gehorchenden in Betracht, wie solche, in deren Formel stehen $R^1$ für Wasserstoff oder eine Methyl-, Äthyl-, n-Propyl-, n-Butyl-, i-Propyl-, i-Butyl-, tert.-Butyl-, Methoxy-, Äthoxy-, n-Propoxy- oder n-Butoxygruppe sowie $R^2$ für eine Methyl-, Äthyl-, n-Propyl-, n-Butyl-, i-Propyl-, i-Butyl- oder tert.-Butylgruppe. Typische Beispiele für gut geeignete Sauerstoffverbindungen (2) sind die Phenylessigsäure-, 3-Phenylpropionsäure- und 4-Phenylbuttersäureester des Methanols und Äthanols, wie insbesondere der Phenylessigsäureäthylester.

Als Aluminiumalkyle (3) mit der angegebenen Formel kommen ebenfalls die einschlägig üblichen, dieser Formel gehorchenden in Betracht, sie sind aus Literatur und Praxis so wohlbekannt, daß auf sie nicht näher eingegangen zu werden braucht. Als herausragende Vertreter seien beispielsweise genannt Triäthylaluminium sowie Diäthylaluminiumchlorid.

Zu den kennzeichnenden phenolischen Stoffen (4) ist zu sagen:

Typische Beispiele für gut geeignete Stoffe mit der angegebenen Formel (I) sind solche, in denen der Rest $R^3$ eine tert.-Butylgruppe, der Rest $R^4$ Wasserstoff oder eine tert.-Butylgruppe, der Rest $R^5$ Wasserstoff oder eine niedere Alkylgruppe, wie die Methyl-, Äthyl-, n-Propyl-, i-Propyl-, n-Butyl-, i-Butyl- oder tert.-Butylgruppe sind und o = 1 ist. Hervorzuheben sind auch Stoffe, in denen die Reste $R^3$ und $R^4$ die gleichen Reste wie vorstehend sind und deren Rest $R^5$ sich symbolisieren läßt durch die Formeln

$$-C_pH_{2p}-\underset{\underset{\displaystyle O}{\|}}{C}-O-C_qH_{2q+1} \qquad \text{(mit o = 1)}$$

oder

$$\left(-C_pH_{2p}-\underset{\underset{\displaystyle O}{\|}}{C}-O-CH_2-\right)_4 C \qquad \text{(mit o = 4)}$$

worin stehen

p für eine ganze Zahl von 0 bis 5, insbesondere 1 bis 4, und

q für eine ganze Zahl von 6 bis 24, insbesondere 8 bis 18,

und wobei die Gruppierungen $-C_pH_{2p}-$ sowie $-C_qH_{2q+1}$ vorzugsweise geradkettig sind.

Namentliche Beispiele für gut geeignete Stoffe mit der angegebenen Formel (I) sind 1-Oxy-2,6-di-tert.-butylbenzol, 4-Oxy-3,5-di-tert.-butyltoluol, der Ester der $\beta$-(4'-Oxy-3',5'-di-tert.-butylphenyl)-propionsäure mit n-Octanol, n-Dodecanol bzw. n-Octadecanol und der Tetra-ester der vorgenannten Säure mit Pentaerythrit.

Typische Beispiele für gut geeignete Stoffe mit der angegebenen Formel (II) sind solche, die sich ableiten im Säureteil von der 2-Oxy-4-naphthoe-, 1-Oxy-2-naphthoe-, 2-Oxy-1-naphthoe- oder 1-Oxy-8-naphthoesäure und im Alkoholteil vom n-Octanol, n-Dodecanol oder n-Octadecanol.

Namentliche Beispiele für gut geeignete Stoffe mit der angegebenen Formel (II) sind der

2-Oxy-4-naphthoesäure-n-octadecylester, 1-Oxy-8-naphthoesäure-n-dodecylester, 1-Oxy-8-naphthoesäure-n-octadecylester, 1-Oxy-2-naphthoesäure-n-octylester und der 2-Oxy-1-naphthoesäure-n-octadecylester.

Das erfindungsgemäße Verfahren erlaubt es, Homo- und Copolymerisate von $C_2$- bis $C_6$-$\alpha$-Monoolefinen in vorteilhafter Weise herzustellen, wobei besonders geeignete zu polymerisierende $\alpha$-Monoolefine Propylen, Buten-1 und 4-Methylpenten-1, sowie — zur Copolymerisation — Äthylen sind.

## Beispiele 1 bis 4

Ausgangsstoffe des Katalysatorsystems sind

(1) ein Titanhalogenid der Formel $TiCl_3 \cdot 0{,}33\ AlCl_3$,
(2) Phenylessigsäureäthylester als Sauerstoffverbindung,
(3) Diäthylaluminiumchlorid als Aluminiumalkyl, und
(4) der in der unten stehenden Tabelle angegebene phenolische Stoff.

Das Titanhalogenid (1) und die Sauerstoffverbindung (2) sind im Molverhältnis von 3 : 1 vor ihrem Einsatz in einer Kugelschwingmühle über eine Zeitspanne von 50 Stunden bei einer Temperatur von 20°C unter einer Mahlbeschleunigung von 50 m $\cdot$ $sec^{-2}$ in Abwesenheit von Verdünnungsmitteln miteinander vermahlen worden.

Zur Polymerisation werden unter Ausschluß von Luft und Feuchtigkeit in einem Rührgefäß 1000 Gewichtsteile n-Heptan vorgelegt, worauf man 2,3 Gewichtsteile der Katalysatorkomponente (3) zugibt sowie soviel des Vermahlungsprodukts aus den Komponenten (1)/(2), daß das Molverhältnis Titanhalogenid (1) : Aluminiumalkyl (3) 1 : 2,5 beträgt und soviel der Katalysatorkomponente (4), daß das Molverhältnis Aluminiumalkyl (3) : phenolischem Stoff (4) den in der Tabelle angegebenen Wert hat.

Die eigentliche Polymerisation wird mit Propylen bei einer Temperatur von 60°C unter einem Druck des Monomeren von 1 bar über 3 Stunden unter Rühren durchgeführt, worauf das gebildete Polypropylen in üblicher Weise isoliert wird; seine Menge und sein in siedendem n-Heptan unlöslicher Anteil sind in der Tabelle angegeben.

## Vergleichsversuch A

Es wird verfahren in Identität mit den Beispielen 1 bis 4, mit der einzigen Ausnahme, daß ohne Zusatz eines phenolischen Stoffes gearbeitet wird.

Das Ergebnis findet sich ebenfalls in der Tabelle.

## Beispiele 5 und 6

Die Ausgangsstoffe (1), (2) und (3) des Katalysatorsystems sind die gleichen wie in den Beispielen 1 bis 4; der jeweilige Ausgangsstoff (4) ist in der Tabelle angegeben.

Zur Polymerisation werden unter Ausschluß von Luft und Feuchtigkeit in ein druckfestes Rührgefäß eingebracht 10 000 Gewichtsteile flüssiges Propylen, 18 Nl Wasserstoff (als Molekulargewichtsregler), 1,68 Gewichtsteile der Katalysatorkomponente (3), soviel des Vermahlungsprodukts aus den Komponenten (1)/(2), daß das Molverhältnis Titanhalogenid (1) : Aluminiumalkyl (3) 1 : 7 beträgt und soviel der Katalysatorkomponente (4), daß das Molverhältnis Aluminiumalkyl (3) : phenolischem Stoff (4) den in der Tabelle angegebenen Wert hat.

Die eigentliche Polymerisation wird bei einer Temperatur von 80°C unter einem Druck von 38 bar über 2 Stunden unter Rühren durchgeführt, worauf das gebildete Polypropylen in üblicher Weise isoliert wird; seine Menge und sein in siedendem n-Heptan unlöslicher Anteil sind in der Tabelle angegeben.

## Vergleichsversuch B

Es wird verfahren in Identität mit den Beispielen 5 bzw. 6, mit der einzigen Ausnahme, daß ohne Zusatz eines phenolischen Stoffes gearbeitet wird.

Das Ergebnis findet sich wiederum in der Tabelle.

In der Tabelle bedeuten:

ODBB = 1-Oxy-2,6-di-tert.-butylbenzol
ODBT = 4-Oxy-3,5-di-tert.-butyltoluol
ODBP = n-Octadecyl-$\beta$-(4'-oxy-3',5'-di-tert.-butylphenyl)-propionat
TEOP = Tetra-ester der $\beta$-(4'-Oxy-3',5'-di-tert.-butylphenyl)-propionsäure mit Pentaerythrit

Tabelle

| Beispiel bzw. | phenolischer Stoff | | Polypropylen | |
|---|---|---|---|---|
| Vgl.-Vers. | Art | Molverhältnis (3) : (4) | Gew.-Teile | n-$C_7H_{16}$ unlösl. |
| 1 | ODBB | 5 : 1 | 212 | 98,7% |
| 2 | ODBT | 5 : 1 | 218 | 98,5% |
| 3 | ODBP | 5 : 1 | 270 | 98,8% |
| 4 | TEOP | 10 : 1 | 212 | 98,4% |
| A | – | – | 188 | 98,1% |
| 5 | ODBP | 21 : 1 | 3550 | 96,8% |
| 6 | TEOP | 21 : 1 | 3050 | 97,2% |
| B | – | – | 3090 | 94,1% |

**Patentanspruch**

Verfahren zum Herstellen von Homo- und Copolymerisaten von $C_2$- bis $C_6$-$\alpha$-Monoolefinen bei Temperaturen von 20 bis 160° C und Drücken von 1 bis 100 bar mittels eines Ziegler-Natta-Katalysatorsystems aus

(1) einem Titanhalogenid der Formel

$$TiCl_3 \cdot m\,AlCl_3$$

worin m steht für eine Zahl von 0 bis 0,5,

(2) einer Sauerstoffverbindung der Formel

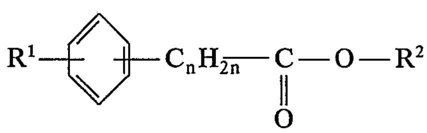

worin stehen

$R^1$ für Wasserstoff, eine $C_1$- bis $C_4$-Alkylgruppe oder eine $C_1$- bis $C_4$-Alkoxygruppe,
$R^2$ für eine $C_1$- bis $C_4$-Alkylgruppe, und
n für eine ganze Zahl von 0 bis 3,

und

(3) einem Aluminiumalkyl der Formel

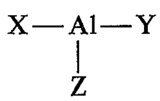

worin stehen

X sowie
Y für eine jeweils nicht mehr als 8 Kohlenstoffatome aufweisende Alkylgruppe,
Z für Chlor oder eine nicht mehr als 8 Kohlenstoffatome aufweisende Alkylgruppe,

mit den Maßgaben, daß (I) das Molverhältnis Titanhalogenid (1) : Sauerstoffverbindung (2) im Bereich von 1 : 1 bis 20 : 1 liegt, (II) das Molverhältnis Titanhalogenid (1) : Aluminiumalkyl (3) 1 : 1 bis 1 : 20 beträgt, sowie (III) das Titanhalogenid (1) und die Sauerstoffverbindung (2) vor ihrem Einsatz miteinander vermahlen worden sind, dadurch gekennzeichnet, daß man ein Katalysatorsystem einsetzt, das als eine weitere Komponente

(4) 1,3,5-Trimethyl-2,4,6-tris-(3,5-di-tert.-butyl-4-hydroxy-benzyl)-benzol oder einen phenolischen Stoff der Formel

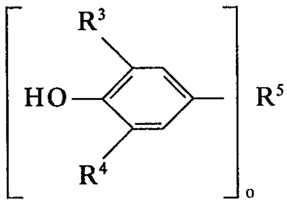

oder

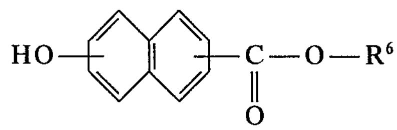

(I) (II)

enthält, worin stehen

$R^3$ für eine $C_1$- bis $C_6$-Alkylgruppe,
$R^4$ für Wasserstoff oder eine $C_1$- bis $C_6$-Alkylgruppe,
$R^5$ für Wasserstoff oder einen nicht mehr als 30 Kohlenstoffatome sowie — gegebenenfalls — bis zu insgesamt 6 Äthergruppen und/oder Estergruppen aufweisenden gesättigten Kohlenwasserstoffrest,
$R^6$ für eine $C_2$- bis $C_{24}$-Alkylgruppe, und
o für eine ganze Zahl von 1 bis 6,

mit der Maßgabe, daß das Molverhältnis Aluminiumalkyl (3) : phenolischer Stoff (4) 1 : 1 bis 40 : 1 beträgt.

**Claim**

A process for the production of homopolymers and copolymers of $C_2-C_6$-$\alpha$-monoolefins at from 20 to 160° C under pressures of from 1 to 100 bar, by means of a Ziegler-Natta catalyst system comprising

(1) a titanium halide of the formula

$$TiCl_3 \cdot m\ AlCl_3$$

where m is a number from 0 to 0.5,

(2) an oxygen compound of the formula

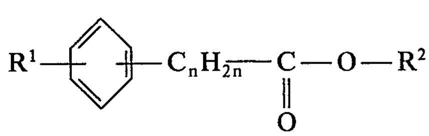

where $R^1$ is hydrogen, $C_1-C_4$-alkyl or $C_1-C_4$-alkoxy, $R^2$ is $C_1-C_4$-alkyl and n is an integer from 0 to 3, and

(3) an aluminium-alkyl of the formula

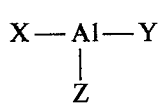

where X and Y are each alkyl of not more than 8 carbon atoms, and Z is chlorine or alkyl of not more than 8 carbon atoms,
with the proviso that (I) the molar ratio of titanium halide (1) to oxygen compound (2) is from 1 : 1 to 20 : 1, (II) the molar tatio of titanium halide (1) to aluminium alkyl (3) is from 1 : 1 to 1 : 20, and (III) the titanium halide (1) and the oxygen compound (2) have been milled together before use, characterized in that a catalyst system is employed which contains, as a further component,

(4) 1,3,5-trimethyl-2,4,6-tris-(3,5-di-tert.-butyl-4-hydroxy-benzyl)-benzene or a phenolic compound of the formula

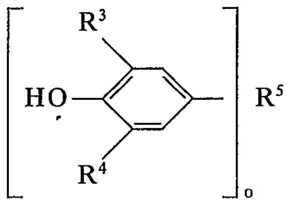 or 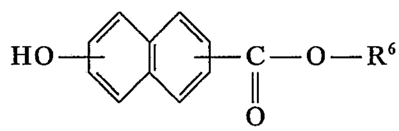

(I) (II)

where $R^3$ is $C_1-C_6$-alkyl, $R^4$ is hydrogen or $C_1-C_6$-alkyl, $R^5$ is hydrogen or a saturated hydrocarbon radical of not more than 30 carbon atoms which may contain up to a total of 6 ether groups and/or ester groups, $R^6$ is $C_2-C_{24}$-alkyl and o is an integer from 1 to 6,
with the proviso that the molar ratio aluminium-alkyl (3) to phenolic compound (4) is from 1 : 1 to 40 : 1.

**Revendication**

Procédé de préparation d'homo- et de co-polymères d'$\alpha$-mono-oléfines en $C_2$ à $C_6$ à des températures de 20 à 160° C et sous des pressions de 1 à 100 bars à l'aide d'un système catalytique selon Ziegler-Natta, composé de:

(1) un halogénure du titane de la formule

$TiCl_3 \cdot m\ AlCl_3$

où m est un nombre entre 0 et 0,5;

(2) un composé oxygéné de la formule

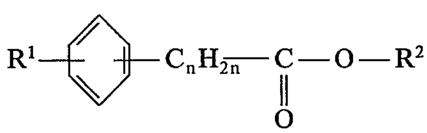

dans laquelle

$R^1$ représente un atome d'hydrogène, un radical alcoyle en $C_1$ à $C_4$ ou un groupe alcoxy en $C_1$ à $C_4$,
$R^2$ désigne un radical alcoyle en $C_1$ à $C_4$ et
n est un nombre entier valant de 0 à 3;

(3) un alcoyl-aluminium de la formule

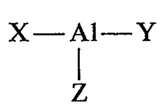

dans laquelle

X et
Y désignent chacun un radical alcoyle ne comprenant pas plus de huit atomes de carbone et
Z représente un atome de chlore ou un radical alcoyle ne comprenant pas plus de huit atomes de carbone,

avec les conditions que:

(I) les proportions molaires de l'halogénure de titane (1) et du composé oxygéné (2) sont dans un rapport compris entre 1 : 1 et 20 : 1;
(II) les proportions molaires de l'halogénure de titane (1) et de l'alcoyl-aluminium (3) sont dans un rapport compris entre 1 : 1 et 1 : 20 et
(III) l'halogénure de titane (1) et le composé oxygéné (2) ont été broyés ensemble avant leur emploi,

caractérisé en ce que l'on emploie un système catalytique qui renferme comme composante additionnelle

(4) du 1,3,5-triméthyl-2,4,6-tris-(3,5-di-tertiobutyl-4-hydroxy-benzyl)-benzène ou un composé phénolique de l'une des formules

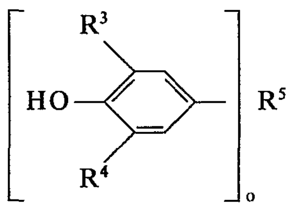

ou

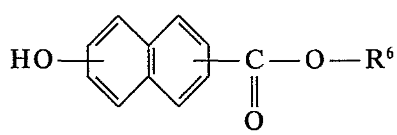

(I) (II)

dans lesquelles

$R^3$ désigne un radical alcoyle en $C_1$ à $C_6$,
$R^4$ désigne un atome d'hydrogène ou un radical alcoyle en $C_1$ à $C_6$,
$R^5$ désigne un atome d'hydrogène ou un groupe hydrocarboné saturé ne comportant pas plus de 30 atomes de carbone et comprenant éventuellement jusqu'à 6 groupes éther et(ou) ester,
$R^6$ représente un radical alcoyle en $C_2$ à $C_{24}$ et
o est un nombre entier valant de 1 à 6,

avec la condition que les proportions molaires de l'alcoylaluminium (3) et du composé phénolique (4) sont dans un rapport compris entre 1 : 1 et 40 : 1.